# NEUE EUROPÄISCHE PATENTSCHRIFT

(11) **EP 0 932 835 B2**
(45) Veröffentlichungstag und Bekanntmachung des Hinweises auf die Entscheidung über den Einspruch: **09.03.2005**
(45) Hinweis auf die Patenterteilung: 16.08.2000
(21) Anmeldenummer: 97911229.9
(22) Anmeldetag: 17.10.1997
(51) Int. Cl.: G01S 7/497, G01S 17/32

(54) **VORRICHTUNG ZUR KALIBRIERUNG VON ENTFERNUNGSMESSGERÄTEN**
DEVICE FOR CALIBRATING DISTANCE-MEASURING APPARATUS
DISPOSITIF D'ETALONNAGE D'APPAREILS DE MESURE DE DISTANCE

(30) Priorität: 21.10.1996 DE 19643287
(43) Veröffentlichungstag der Anmeldung: 04.08.1999
(73) Patentinhaber: Leica Geosystems AG, 9435 Heerbrugg (CH)
(72) Erfinder: GIGER, Kurt, CH-9464 Ruethi (CH)
(74) Vertreter: Kaminski, Susanne
(86) Internationale Anmeldenummer: PCT/EP1997/005735
(87) Internationale Veröffentlichungsnummer: WO 1998/018019

(56) Entgegenhaltungen:
- EP-A- 0 336 027
- CH-A5- 589 856
- DD-B1- 125 446
- DE-A1- 4 316 348
- DE-A1- 6 743 678
- DE-B2- 2 229 339
- DE-C2- 3 710 041
- US-A- 5 125 736
- US-A- 5 180 922
- US-B1- 4 403 857
- US-B1- 4 531 833
- Datenblatt CQL80/D der Firma Philips, 1990
- SPIE Vol. 740, S. 20 - 24, 1987

## Beschreibung

Die Erfindung betrifft eine Vorrichtung zur Kalibrierung von Entfernungsmeßgeräten entsprechend den Merkmalen im Oberbegriff des Anspruchs 1.

Entfernungsmeßgeräte der genannten Art sind als Handmeßgeräte im Handel. Ihr Entfernungsmeßbereich beträgt einige 10m und sie werden hauptsächlich in der Bauvermessung, z.B. zum 3-dimensionalen Vermessen von Räumen eingesetzt. Der Sender emittiert eine intensitätsmodulierte Strahlung. Meist werden Wellenlängen im sichtbaren Bereich verwendet, was die Anzielung der Meßpunkte erleichtert. Die Strahlung wird vom Meßobjekt reflektiert bzw. gestreut und vom Empfänger aufgenommen. Aufgrund der Phasenlage der modulierten Strahlung gegenüber dem Sender ergibt sich die Entfernung zum Meßobjekt.

Es ist bekannt, daß die Meßgenauigkeit dieser Entfernungsmeßgeräte stark von Umwelteinflüssen und gerätebedingten Einflüssen bestimmt wird. Beispielsweise wirken sich wechselnde Umgebungstemperaturen, der große Dynamikbereich der Reflexion des beleuchteten Meßobjekts, aber insbesondere eine bauteilbedingte Temperaturdrift der Elektronik auf die Entfernungsmessung aus. Um diese Einflüsse zu verringern wird eine geräteinterne Referenzstrecke bekannter Länge zur Kalibrierung verwendet.

Aus der DE 22 29 339 B2 ist ein elektrooptischer Entfernungsmesser bekannt, bei dem der emittierte Lichtstrahl zur Grob- und Feinmessung umschaftbar mit zwei verschiedenen Meßfrequenzen moduliert wird. Im Empfänger wird die Grobmeßfrequenz direkt ohne Mischung den Zwischenfrequenz-Verstärkern (ZF) zugeführt. Zudem wird im Empfänger ein Hilfsoszillator verwendet, dessen Frequenz so gewählt ist, daß sie der Differenz der beiden Meßfrequenzen entspricht. Somit sind die Grobmeßfrequenz und die Niederfrequenz, die sich bei der Feinmessung nach einer Frequenzmischung ergibt, gleich. Dadurch wird ein sonst üblicher zweiter Hilfsoszillator eingespart, was zur Reduzierung teurer Bauteile führt. Bei der Durchführung einer Entfernungsmessung wird mit Hilfe einer mechanischen Umschaltblende der Meßstrahl wechselweise über eine Meß- und Kalibrierstrecke geführt.

In der DE 3710 041 C2 ist eine Vorrichtung zur berührungslosen opto-elektronischen Abstandsmessung mit Hilfe von Faserbündeln zur Lichtleitung offenbart. Dabei trifft das Licht am Ende eines Faserbündels als Referenzlicht auf einen Referenzspiegel, während das Licht eines zweiten Faserbündels als Meßlicht über eine Linse auf einen Reflektor gerichtet ist. Die Auswertung des reflektierten Meß- und Referenzlichtes erfolgt über Mischstufen, die mit einem gemeinsamen Hilfsoszillator verbunden sind. Die Mischstufen liefern Zwischenfrequenzsignale an die Eingänge einer Phasenmeßeinrichtung.

In der DE 4 316 348 A1 wird eine Vorrichtung zur Distanzmessung beschrieben, bei der mit Hilfe einer schaltbaren Strahlenumlenkeinrichtung eine interne Referenzstrecke erzeugt wird. Dabei wird die Strahlenumlenkeinrichtung um eine Achse motorisch in den Meßlichtstrahlengang eingeschwenkt, wo sie das Meßlicht jetzt als Referenzlicht zur Kalibrierung auf die Empfangseinrichtung lenkt. Durch die mechanische Umschaltung der Strahlenumlenkeinrichtung gelangen somit Referenzlicht und Meßlicht abwechselnd auf die Empfangseinrichtung. Diese Umschaltung kann während eines Entfernungsmeßvorganges mehrmals erfolgen.

Während der Meßzeit, in der die Meß- und Referenzstrahlung zeitlich nacheinander detektiert wird, ändern sich die Driftzustände der elektronischen Bauteile. Alle elektronischen Bauteile und Leitungen bewirken im Signalpfad eines optischen Entfernungsmeßgerätes Signalverzögerungen. Diese sind nicht nur statischer Natur sondern sie ändern sich auch zeitlich, insbesondere aufgrund der Temperatur der elektronischen Bauteile. Neben Temperaturänderungen der Umgebung ist hauptsächlich die Eigenerwärmung der Elektronik, hier vor allem der Senderelektronik, für die Drift der Signale verantwortlich. Ein Phasenmesser registriert diese Signalverzögerungen als Phasenverschiebungen, die zusätzlich zu der eigentlich zu bestimmenden entfernungsabhängigen Phasenverschiebung hinzukommen.

Besonders ausgeprägt ist dieser Effekt direkt nach dem Einschalten des Entfernungsmeßgerätes, da in diesem Zustand die Temperaturänderungen der elektronischen Bauteile durch ihre Eigenerwärmung am größten sind. Dadurch kommt es zu besonders großen Signalverzögerungen, die eine Phasenverschiebung der Signale und somit Fehler in der Entfernungsmessung bewirken. Aber gerade für batteriebetriebene Handmeßgeräte besteht die Forderung, daß sofort nach Einschalten des Gerätes mit der spezifizierten Genauigkeit gemessen werden soll. Durch mehrmaliges mechanisches Umschalten zwischen Meß- und Referenzstrahlung während einer Messung wird die thermische Drift der Elektronik zu einem Teil kompensiert. Eine hohe Meßgenauigkeit bei kurzen Meßzeiten unmittelbar nach dem Einschalten des Geräts wird dabei allerdings nicht erreicht.

Zudem sind viele Geräte so eingerichtet, daß sich am Ende einer Entfernungsmessung nach einer kurzen Wartezeit zumindest die Hochfrequenzelektronik des Senders automatisch abschaltet, da diese besonders viel elektrische Energie verbraucht. Durch die automatische Abschaltung wird der Akkumulator des Handmeßgerätes geschont. Bei einer erneuten Meßanforderung schaltet sich das Gerät dann automatisch wieder ein, wobei sich die damit verbundenen thermischen Driftprobleme, wie oben geschildert, wiederholen.

Einen weiteren Anteil zur Meßungenauigkeit liefert auch die üblicherweise als Meßempfänger eingesetzte Avalanche-Fotodiode. Diese besitzt zwar den hohe von der Temperatur der Diode abhängige Arbeitsspannung in Kauf genommen werden. Da jedoch die Arbeitsspannung in Abhängigkeit von der Diodentemperatur nachgeregelt werden muß, verändert sich zwangsläufig auch die Phasenlage des Empfangssignals und damit der Meßwert der Entfernung.

Schließlich ergeben sich bei mechanischen Mehrfachumschaltungen während eines Meßvorganges hohe mechanische Beanspruchungen und somit eine hohe Abnutzung der bewegten Teile. Entsprechend aufwendige Konstruktionen bedeuten andererseits wiederum hohe Herstellkosten und meistens ein großes Gewicht und Volumen.

Es ist die Aufgabe der Erfindung, bei der opto-elektronischen Entfernungsmessung eine Vorrichtung zur Kalibrierung anzugeben, mit der hohe Entfernungsmeßgenauigkeiten bei kurzen Meßzeiten und insbesondere unmittelbar nach Einschalten des Geräts erzielt werden, die Zuverlässigkeit des Geräts erhöht wird und mit der eine einfache und kompakte Konstruktion mit niedrigen Herstellkosten ermöglicht wird.

Diese Aufgabe wird erfindungsgemäß durch die im Kennzeichen des Anspruchs 1 angegebenen Merkmale gelöst. Vorteilhafte Ausgestaltungen und Weiterbildungen der Erfindung ergeben sich aus den Unteransprüchen.

Erfindungsgemäß wird aus dem Senderstrahlengang des Entfernungsmeßgeräts permanent ein Teil der hochfrequent modulierten Senderstrahlung ausgekoppelt und über eine als Kalibrierstrecke dienende interne Referenzstrecke einem Referenzempfänger, z.B. einer PIN-Diode, zugeführt. Diese ist mit einem Frequenzmischer verbunden. Dieser Frequenzmischer wiederum ist direkt mit der als Meßempfänger der Meßstrahlung eingesetzten Avalanche-Fotodiode verbunden. In diese Verbindung wird ein hochfrequentes elektrisches Signal, das als Mischerfrequenz bezeichnet werden soll, eingekoppelt. Diese Mischerfrequenz wird somit einerseits über den Frequenzmischer mit dem hochfrequenten Modulationssignal der von dem Referenzempfänger empfangenen Referenzstrahlung gemischt, wodurch ein niederfrequentes Kalibriersignal entsteht. Andererseits wird die Mischerfrequenz mit dem hochfrequenten Modulationssignal der von der Avalanche-Fotodiode empfangenen Meßstrahlung gemischt, wodurch ein niederfrequentes Meßsignal entsteht. Die Avalanche-Fotodiode stellt dabei einen sogenannten Direktmischer dar. Das niederfrequente Kalibrier- und das niederfrequente Meßsignal werden der Phasenmessung zugeführt. Dabei können zwei separate Phasenmesser zur gleichzeitigen Phasenmessung eingesetzt werden. Die Phasenmessung ist aber auch mit nur einem Phasenmesser durch sequentielles Messen möglich.

Entscheidend ist, daß durch die elektrische Verbindung zwischen dem dem Referenzempfängerzugeordneten Frequenzmischer und der Avalanche-Fotodiode sich die Signalverzögerungen, die sich aufgrund der variierenden Arbeitsspannung der Avalanche-Fotodiode ergeben, gleichermaßen auf das niederfrequente Kalibrier- und Meßsignal auswirken. Damit wird exakt dieselbe Phasenverschiebung bei dem niederfrequenten Kalibrier- und Meßsignal hervorgerufen und tritt deshalb bei der Phasenmessung mit Subtraktion der Meßund Kalibrierphase nicht mehr auf.

Im Detail weisen Avalanche-Fotodioden gegenüber anderen Fotodioden eine etwa 100fach höhere Verstärkung und somit eine entsprechend hohe Empfindlichkeit auf. Sie benötigen dafür im Betrieb eine sehr viel höhere und temperaturabhängige Arbeitsspannung. Deswegen müssen Avalanche-Fotodioden mit variabler, von der Temperatur abhängigen Vorspannung betrieben werden. Dies hat zur Folge, daß sich die Kapazität einer Avalanche-Fotodiode mit der variierenden Vorspannung verändert, wodurch unerwünschte Phasenverschiebungen hervorgerufen werden. Diese Phasenverschiebungen sind jedoch sowohl für das von der Avalanche-Fotodiode gelieferte niederfrequente Meßsignal als auch für das niederfrequente Kalibriersignal wegen der elektrischen Verbindung zwischen Frequenzmischer und Avalanche-Fotodiode gleich groß. Somit ist die temperaturabhängig variierende Vorspannung der Avalanche-Fotodiode als Fehlerquelle für den aus der Phasenmessung ermittelten Entfernungswert eliminiert.

Ebenso werden auch die Temperaturdriften des Senders, insbesondere der Senderdiode und der zugehörigen Treiberelektronik kurz nach dem Einschalten des Geräts durch den erfindungsgemäßen Kalibriervorgang kompensiert. Die Detektion von Meß- und Referenzstrahlung erfolgt zeitgleich, indem ständig ein Teil der Senderstrahlung dem Referenzempfänger zugeführt wird. Diese Zuführung kann beispielsweise durch Auskoppeln der Referenzstrahlung mittels eines teildurchlässigen Spiegels aus dem Senderstrahlengang erfolgen. Die ausgekoppelte Strahlung gelangt über die Referenzstrecke auf den Referenzdetektor. Dabei kann auch immer eine ausreichende Intensität der zum Meßobjekt führenden Meßstrahlung gewährleistet werden, da mit Hilfe der heutigen leistungsstarken Halbleiterlaser als Sender die Stärke ihrer Strahlungsemission entsprechend geregelt werden kann.

Dadurch, daß Referenz- und Meßstrahlung nicht zeitlich hintereinander sondern zeitgleich empfangen werden und ihre gegenseitige Phasenlage gemessen wird, kalibriert sich eine Drift des Senders bei der Differenzbildung der Phasen heraus.

Insgesamt wird durch diese opto-elektronische Kalibrierung die Genauigkeit der Entfernungsmessung erhöht, und zwar unter den Anforderungen, daß nur kurze Meßzeiten zugelassen sind und daß sofort nach Einschalten des Geräts die erhöhte Meßgenauigkeit erreicht wird. Außerdem werden im Vergleich zu den herkömmlichen sukzessiven Meßmethoden die Meßzeiten auf etwa auf die Hälfte verkürzt, da Umschaltvorgänge entfallen. Auch die Gerätezuverlässigkeit wird durch die Erfindung verbessert, da keine mechanisch beweglichen Bauteile notwendig sind. Darüber hinaus wirkt sich der Wegfall der mechanischen Umschaltvorrichtung durch geringeres Gewicht und Volumen für ein Handmeßgerät positiv aus. Ebenso sind auch die damit verbundenen niedrigeren Herstellkosten von Vorteil. Schließlich ist mit den kurzen Meßzeiten eine deutlich größere Anzahl von Messungen bei einer vorgegebenen Akkumulatorladung möglich.

Im folgenden werden Ausführungsbeispiele der Erfindung anhand der Zeichnung näher erläutert. Es zeigt:
- Fig. 1: eine schematische Darstellung des Erfindungsgegenstandes,
- Fig. 2a: eine herkömmliche "Phase Locked Loop" (PLL) - Schaltung,
- Fig. 2b: eine Integration von PLL-Schaltung und Erfindungsgegenstand und
- Fig. 3: eine Kombination des Erfindungsgegenstandes mit einer herkömmlichen mechanischen Umschaltung.

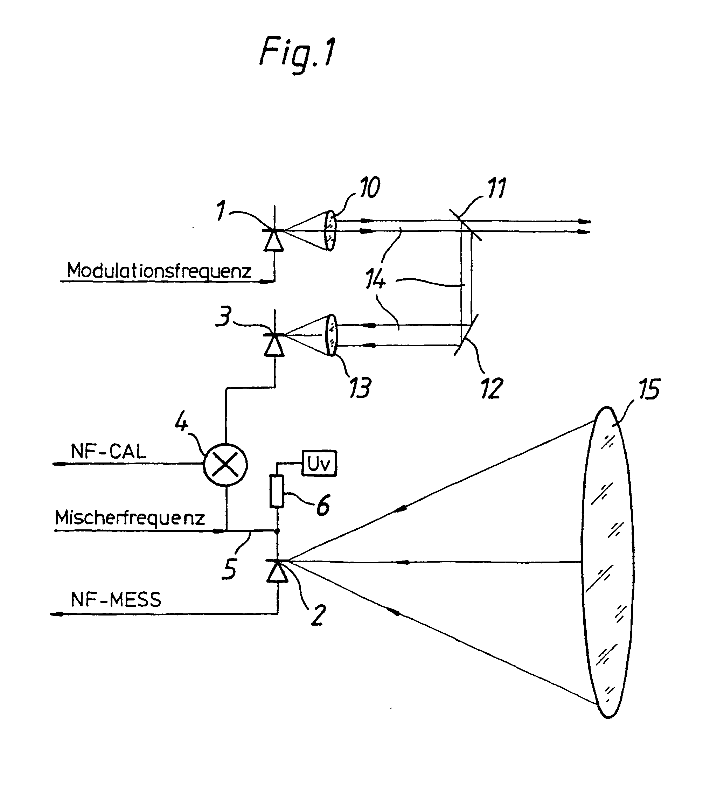

In Fig. 1 ist schematisch ein erfindungsgemäßes Entfernungsmeßgerät dargestellt. Die vom Sender 1 emittierte und von einer Kollimationsoptik 10 kollimierte optische Strahlung wird durch einen Strahlenteiler 11 in ein Meßstrahlenbündel und in ein Referenzstrahlenbündel aufgeteilt. Die Meßstrahlung gelangt zu einem Meßobjekt, dessen Entfernung bestimmt werden soll. Die vom Meßobjekt reflektierte oder gestreute Strahlung wird in üblicher Weise über eine Empfangsopitk 15 auf einen Meßempfänger 2 geleitet.

Die Referenzstrahlung wird nach Durchlaufen eines Referenzweges 14, der über den Strahlenteiler 11, einen Umlenkspiegel 12 und eine Optik 13 führt, von einem Referenzempfänger 3 empfangen. Der Referenzweg 14 stellt die optische Kalibrierstrecke des Entfernungsmeßgerätes dar. Selbstverständlich kann der Referenzweg 14 je nach Platzverhältnissen im Gerät auch anders gestaltet und beispielsweise der Referenzempfänger 3 direkt dem Strahlenteiler 11 nachgeordnet werden. Als Referenzempfänger 3 wird vorzugsweise eine PIN-Diode eingesetzt. Die elektrischen Signale des Referenzempfängers 3 werden an einen Frequenzmischer 4 weitergeleitet. Wird statt der PIN-Diode als Referenzempfänger 3 eine Avalanche-Fotodiode eingesetzt und diese als Direktmischer betrieben, so ersetzt sie zugleich den Frequenzmischer 4.

Dem Sender 1 wird eine hochfrequente Modulationsfrequenz aufgeprägt, mit der die emittierte Strahlung intensitätsmoduliert wird. Mit einer ähnlich großen Frequenz als Mischerfrequenz werden gleichzeitig über eine elektrische Verbindungsleitung 5 der Meßempfänger 2 und der Frequenzmischer 4 versorgt. Dabei wird als Meßempfänger 2 eine Avalanche-Fotodiode eingesetzt, die als Direktmischer betrieben wird und die über einen Vorwiderstand 6 an einer variablen Vorspannung U_{V} liegt.

Die Mischung der vom Meßempfänger 2 empfangenen Meßsignale mit den Signalen der Mischerfrequenz führt zu einem niederfrequenten Signal NF-MESS. Die bei der Mischung - oder mathematisch gesehen einer Multiplikation - der Signale ebenfalls entstehenden hochfrequenten Signalanteile werden mit üblichen Filtern ausgefiltert. Zugleich werden die Signale der Mischerfrequenz auch mit den von dem Referenzempfänger 3 empfangenen Referenzsignalen im Frequenzmischer 4 gemischt und führen zu einem niederfrequenten Signal NF-CAL. Die gegenseitige Phasenlage von NF-MESS und NF-CAL wird mit Hilfe je eines Phasenmessers gleichzeitig gemessen. Es wird die Phasendifferenz dieser niederfrequenten Signale gebildet, woraus sich die Entfernung zum Meßobjekt ergibt.

Erfindungsgemäß sind der Meßempfänger 2 und Mischer 4 über die Verbindungsleitung 5, die mit der hochfrequenten Mischerfrequenz beaufschlagt wird, elektrisch miteinander verbunden. Dies hat den entscheidenden Vorteil, daß die vom Meßempfänger 2 erzeugten unerwünschten Phasenverschiebungen, die unvermeidbar aufgrund der temperaturabhängigen Spannungsnachführung der Vorspannung U_{V} entstehen, gleichzeitig und in gleichem Ausmaß die Signale NF-MESS und NF-CAL beeinflussen. Dadurch werden bei der Differenzbildung dieser beiden Signale die unerwünschten Phasenverschiebungen durch den Meßempfänger 2 vollständig ausgeglichen. Somit wird letztlich mit Hilfe der Verbindungsleitung 5 gemäß der Schaltungsanordnung in Fig. 1 eine sehr genaue Kalibrierung für die Entfernungsmessung ermöglicht.

Darüber hinaus werden zugleich auch die Driften des Senders 1 und seiner Treiberelektronik aufgrund des zeitgleichen Empfangs der Referenz- und Meßstrahlung während der laufenden Entfernungsmessung kompensiert. Somit ist die Phasendifferenz von Referenz- und Meßstrahlung unabhängig von der Drift des Senders 1. Die Phasendifferenz enthält im wesentlichen nur noch die Entfernungsinformation.

Mit dieser opto-elektronischen Kalibrierung erhöht sich die Entfernungsmeßgenauigkeit des Geräts bei kurzen Meßzeiten und kurz nach Einschalten des Geräts im Vergleich zu der Kalibrierung mit mechanischer Umschaltung deutlich. Zudem sind Gewicht und Kosten verringert, die Zuverlässigkeit des Geräts erhöht und eine größere Anzahl von Messungen mit nur einer Akkuladung möglich.

Für den Sender 1 ist gemäß Fig. 1 eine Laserdiode mit einer nach vorn gerichteten Strahlungsemission eingesetzt. Statt dessen können auch kommerziell erhältliche Laserdioden verwendet werden, die ihre Strahlung zugleich in zwei entgegengesetzte Richtungen emittieren. Dabei läßt sich die nach vorn gerichtete Strahlung als Meßstrahlung und die rückwärts gerichtete Strahlung als Referenzstrahlung nutzen. Die Referenzstrahlung kann direkt auf den Referenzempfänger 3 gerichtet werden. Somit braucht in diesem Fall die Referenzstrahlung nicht aus dem Meßstrahlengang ausgekoppelt werden und es erübrigen sich der Strahlenteiler 11 und gegebenenfalls auch der Umlenkspiegel 12.

Weiterhin sind auch Laserdioden erhältlich, in denen zusätzlich eine Empfangsdiode integriert ist, die die rückwärts emittierte Laserstrahlung empfangen kann. Diese Empfangsdiode dient normalerweise zur Regelung der Laserlichtleistung. Sie kann aber für den erfindungsgemäßen Zweck auch den Referenzempfänger 3 darstellen. Damit wird in einem einzigen elektronischen Baustein die Strahlungserzeugung und die Detektion der Referenzstrahlung realisiert. Bei dieser platzsparenden und kostengünstigen Variante müssen allerdings die Leistungsgrenzen der integrierten Empfangsdiode berücksichtigt werden.

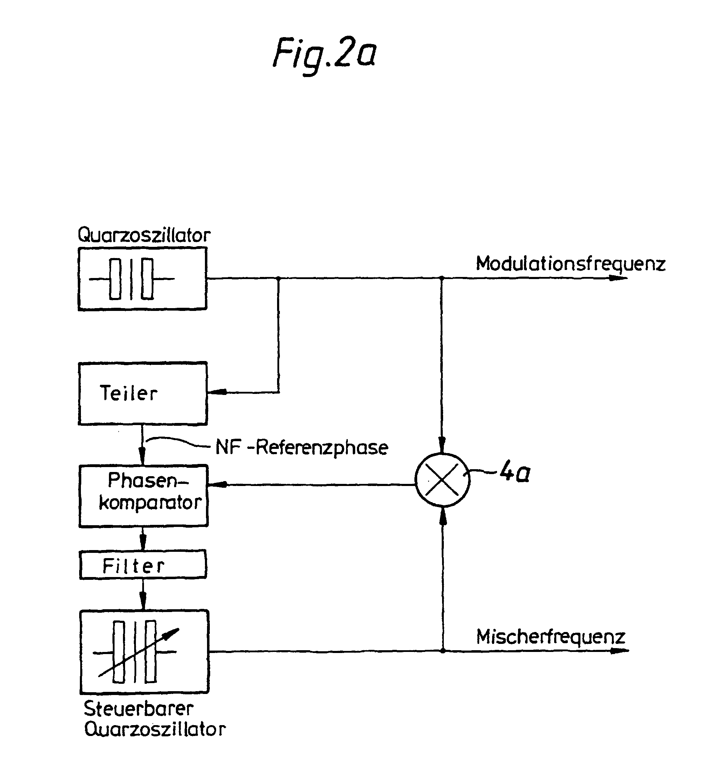

Eine weitere Schaltungsvariante betrifft den Frequenzmischer 4. Üblicherweise werden die für den Sender 1 benötigte Modulationsfrequenz und die für den Meßempfänger 2 und den Frequenzmischer 4 benötigte Mischerfrequenz mit Hilfe einer "Phase Locked Loop" (PLL) - Schaltung erzeugt, wie sie in Fig. 2a schematisch dargestellt ist. Hierzu werden die hochfrequenten Signale eines fest eingestellten Quarzoszillators und eines steuerbaren, in seiner Frequenz veränderlichen Quarzoszillators einem Frequenzmischer 4a zugeführt. Das im Frequenzmischer 4a erzeugte niederfrequente Signal wird im Phasenkomparator mit der niederfrequenten NF-Referenzphase verglichen. Dementsprechend wird die Frequenz des steuerbaren Quarzoszillators phasenstabil zur NF-Referenzphase geregelt.

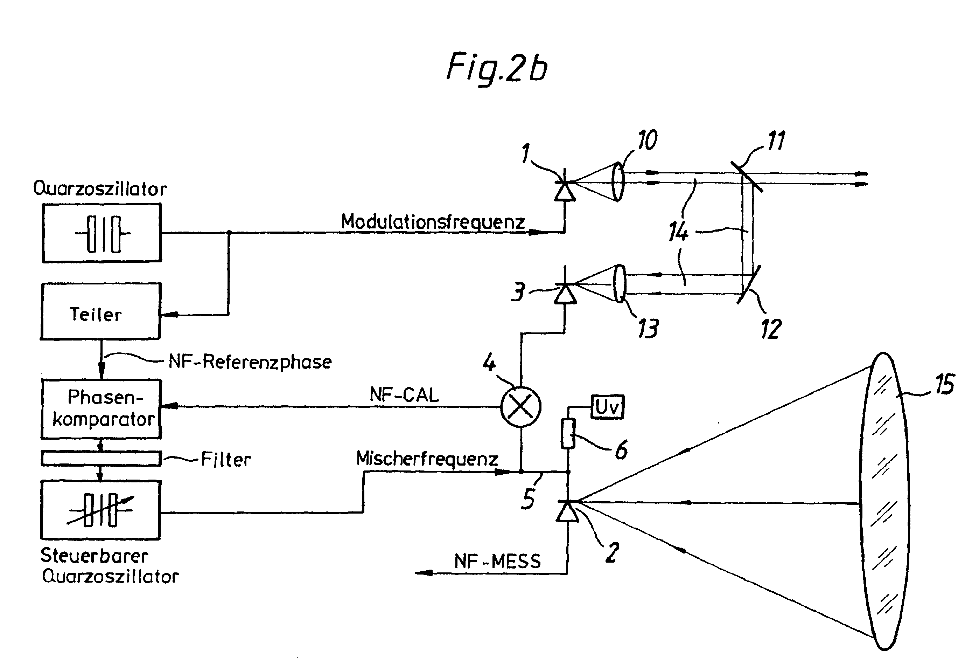

Die Funktion des Frequenzmischers 4a der PLL-Schaltung kann aber auch gleichzeitig von dem Frequenzmischer 4 wahrgenommen werden. In Fig. 2b ist dargestellt, wie der Frequenzmischer 4 für die PLL-Schaltung mitbenutzt werden kann. In einem solchen Fall regelt die PLL-Schaltung automatisch stets die Differenz zwischen der Phase der Modulationsfrequenz und der Phase der Mischerfrequenz auf einen konstanten Wert bezüglich der NF-Referenzphase der PLL-Schaltung. Wird dieser konstante Wert einmal durch eine Kalibrierung bei der Gerätefertigung ermittelt und im Gerät abgespeichert, so genügt eine einzige Phasenmessung pro Distanzmessung. Insgesamt wird dabei nur ein einziger Frequenzmischer und Phasenmesser im Gerät benötigt, so daß sich Kostenvorteile ergeben.

Weiterhin kann für eine weitere Ausgestaltungsvariante eine zusätzliche LED eingesetzt werden, mit deren Hilfe zu Beginn einer jeden Entfernungsmessung der Meßempfänger 2 mit einer bekannten Lichtintensität beleuchtet wird. Damit kann der Arbeitspunkt des Meßempfängers 2 eingestellt werden, d.h. es wird die Vorspannung U_{V} der als Meßempfänger 2 dienenden Avalanche-Fotodiode eingeregelt. Dazu wird mit den im Entfernungsmeßgerät bereits vorhandenen und erfindungsgemäßen Mitteln die zusätzliche LED niederfrequent moduliert, um vom Hintergrundlichtpegel unabhängig zu sein, die modulierte Lichtemission vom Meßempfänger 2 gemessen und damit die Vorspannung U_{V} eingeregelt. Dieser Vorgang läuft innerhalb weniger Millisekunden ab, wodurch die gesamte Meßzeit nur unerheblich beeinflußt wird. Vorteilhafterweise liefert diese anfängliche Einregelung der Vorspannung U_{V} auf ihren Arbeitspunkt bei jeder Entfernungsmessung einen zusätzlichen Beitrag zur Verbesserung der Meßgenauigkeit. Darüber hinaus kann sogar die sonst grundsätzliche Bestimmung des spezifischen Temperaturkoeffizienten einer jeden Avalanche-Fotodiode entfallen.

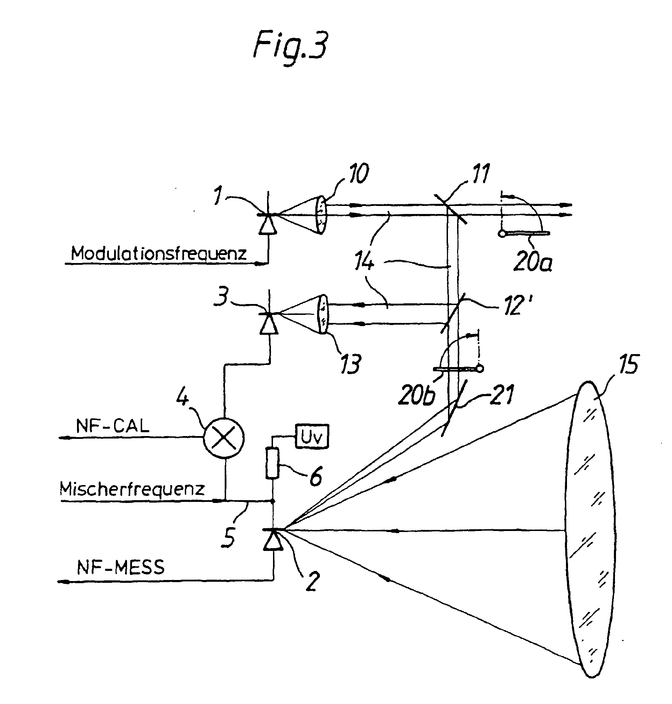

Schließlich kann der Erfindungsgegenstand auch mit einem aus dem Stand der Technik bekannten Entfernungsmeßgerät kombiniert und verbunden werden. Fig. 3 zeigt schematisch eine solche Kombination der erfindungsgemäßen opto-elektronischen Kalibrierung mit einer herkömmlichen Kalibrierung mit Strahlumschaltung. Dabei kann die Meßstrahlung mit Hilfe der Strahlumschaltvorrichtung 20a,b über einen Strahlenteiler 12' und einen Spiegel 21 direkt auf den Meßempfänger 2 gelangen. Die Strahlumschaltvorrichtung 20a, b kann wie in Fig. 3 dargestellt mechanisch ausgeführt sein. Natürlich ist auch eine elektro-optische Ausführung möglich, z.B. mit Hilfe von Kerrzellen. Mit Hilfe der Strahlumschaltvorrichtung 20a,b wird somit altemierend ein Kalibrier- und Meßsignal vom Meßempfänger 2 erzeugt, wobei beide Signale von den bereits beschriebenen Vorteilen der Verbindung 5 profitieren, und zugleich liegt auch das opto-elektronische Kalibriersignal des Referenzempfängers 3 vor. Insgesamt wird durch diese zweifache Kalibrierung die Meßgenauigkeit noch weiter gesteigert und übertrifft die Meßgenauigkeiten der Meßgeräte mit jeweils der einzelnen Kalibrierart. Für die Kombination und Verbindung der beiden Kalibrierarten müssen dann allerdings wieder lange Meßzeiten und ein aufwendigeres Meßinstrument in Kauf genommen werden.

## Patentansprüche

1. Vorrichtung zur Kalibrierung von Entfernungsmessgeräten mit einem Sender (1), der eine hochfrequent modulierte optische Strahlung emittiert und ein Messobjekt beleuchtet, einem Messempfänger (2), der die vom Messobjekt reflektierte Strahlung detektiert, und einem Referenzempfänger (3), wobei die Entfernungsmessung nach dem Phasenmessprinzip erfolgt und
- a) eine interne Referenzstrecke (14) als Kalibierstrecke dient, über die stets ein Teil der vom Sender (1) emittierten Strahlung auf den Referenzempfänger (3) gelenkt wird, so dass die im Referenzempfänger (3) und im Messempfänger (2) detektierte Strahlung gleichzeitig ausgewertet werden kann,
**dadurch gekennzeichnet, dass**
- b) eine - für eine hochfrequente Mischerfrequenz - direkte, elektrische Verbindungsleitung (5) zwischen einem die elektrischen Signale des Referenzempfängers (3) empfangenden Frequenzmischer (4) und einer als Messempfänger (2) dienenden Avalanche-Fotodiode besteht, wobei in die elektrische Verbindungsleitung (5) die hochfrequente Mischerfrequenz eingespeist wird, so dass die hochfrequente Mischerfrequenz die Vorspannung (Uᵥ) der Avalanche-Fotodiode überlagert und gleichzeitig dem Frequenzmischer (4) zugeführt wird, wodurch im Frequenzmischer (4) ein niederfrequentes Kalibriersignal (NF-CAL) und in der Avalanche-Fotodiode ein niederfrequentes Messsignal (NF-MESS) entsteht, deren gegenseitige Phasenlage zur Entfernungsmessung ermittelt wird.

2. Vorrichtung nach Anspruch 1, **dadurch gekennzeichnet, daß** als Referenzempfänger (3) eine PIN-Fotodiode eingesetzt ist.

3. Vorrichtung nach Anspruch 1 **dadurch gekennzeichnet, daß** der Referenzempfänger (3) im Sender (1) integriert ist.

4. Vorrichtung nach Anspruch 1, **dadurch gekennzeichnet, daß** als Referenzempfänger (3) eine als Direktmischer betriebene Avalanche-Fotodiode eingesetzt ist, wodurch der Frequenzmischer (4) ersetzt ist.

5. Vorrichtung nach einem der Ansprüche 1 bis 3, **dadurch gekennzeichnet, daß** der Frequenzmischer (4) zugleich auch als Mischer zur Erzeugung der Mischerfrequenz und der Modulationsfrequenz des Senders (1) vorgesehen ist.

6. Vorrichtung nach einem der vorhergehenden Ansprüche, **dadurch gekennzeichnet, daß** zur Arbeitspunktermittlung des Meßempfängers (2) eine separate, niederfrequent modulierte LED vorgesehen ist, die zu Beginn einer jeden Entfernungsmessung den Meßempfänger (2) mit einer bekannten Lichtintensität für eine sehr kurze Zeit beleuchtet.

7. Vorrichtung nach einem der vorhergehenden Ansprüche, **dadurch gekennzeichnet, daß** eine Strahlumschaltvorrichtungen (20a,b) vorgesehen ist, die so eingestellt werden kann, daß die Strahlung des Senders 1 statt zum Meßobjekt direkt auf den Meßempfänger (2) gelangt.

## Claims

1. Device for calibrating distance-measuring apparatuses, comprising a transmitter (1) which emits high-frequency modulated optical radiation and illuminates a measured object, a measuring receiver (2) which detects the radiation reflected by the measured object, and a reference receiver (3), the distance measurement being based on the phase measurement principle, and
- a) an internal reference distance (14) serving as a calibration distance over which a part of the radiation emitted by the transmitter (1) is always deflected to the reference receiver (3) so that the radiation detected in the reference receiver (3) and in the measuring receiver (2) can be evaluated simultaneously,
**characterized in that**
- b) a direct - for a high mixer frequency - electrical connecting line (5) is present between a frequency mixer (4) receiving the electrical signals of the reference receiver (3) and an avalanche photodiode serving as measuring receiver (2), the high mixer frequency being fed into the electrical connecting line (5) so that the high mixer frequency is superposed on the bias voltage (Uᵥ) of the avalanche photodiode and simultaneously fed to the frequency mixer (4), with the result that a low-frequency calibration signal (LF-CAL) is generated in the frequency mixer (4) and a low-frequency measuring signal (LF-MEAS) is generated in the avalanche photodiode, the mutual phase position of which is determined for the distance measurement.

2. Device according to Claim 1, **characterized in that** a PIN photodiode is used as reference receiver (3).

3. Device according to Claim 1, **characterized in that** the reference receiver (3) is integrated in the transmitter (1).

4. Device according to Claim 1, **characterized in that** an avalanche photodiode operated as a direct mixer is used as reference receiver (3), with the result that the frequency mixer (4) is replaced.

5. Device according to any of Claims 1 to 3, **characterized in that** the frequency mixer (4) is simultaneously also provided as a mixer for generating the mixer frequency and the modulation frequency of the transmitter (1).

6. Device according to any of the preceding Claims, **characterized in that** a separate, low-frequency modulated LED which illuminates the measuring receiver (2) with a known light intensity for a very short time at the beginning of each distance measurement is provided for determining the operating point of the measuring receiver (2).

7. Device according to any of the preceding Claims, **characterized in that** a beam switching device (20a, b) which can be adjusted so that the radiation of the transmitter 1 travels directly to the measuring receiver (2) instead of to the measured object is provided.

## Revendications

1. Dispositif détalonnage d'appareils de mesure de distance, équipé d'un émetteur (1), émettant un rayonnement optique, modulé à haute fréquence, et illuminant un objet de mesure, d'un récepteur de mesure (2) qui détecte le rayonnement réfléchi par l'objet de mesure, et d'un récepteur de référence (3), la mesure de distance s'effectuant selon le principe de mesure des phases, et
- a) une distance de référence (14) interne sert de distance d'étalonnage, par l'intermédiaire de laquelle une partie du rayonnement émis par l'émetteur (1) est toujours dirigée sur le récepteur de référence (3), si bien que le rayonnement, détecté dans le récepteur de référence (3) et dans le récepteur de mesure (2), peut être évalué simultanément,
**caractérisé en ce qu'**
- b) une ligne de liaison (5) électrique, directe - pour une fréquence de mélangeur de valeur de fréquence élevée - est constituée entre un mélangeur de fréquence (4) recevant les signaux électriques du récepteur de fréquence (3) et une photodiode à avalanche, servant de récepteur de mesure (2), dans la ligne de liaison (5) électrique étant injectée la fréquence de mélangeur de valeur de fréquence élevée, si bien que la fréquence de mélangeur de valeur de fréquence élevée se superpose à la tension de polarisation (Uᵥ) de la photodiode à avalanche et, simultanément, est amenée au mélangeur de fréquence (4), faisant qu'un signal d'étalonnage (NF-CAL) à basse fréquence est constitué dans le mélangeur de fréquence (4) et un signal de mesure (NF-MESS) à basse fréquence est constitué dans la photodiode à avalanche, signaux la position de phase mutuelle est appréhendée afin de déterminer la distance d'éloignement.

2. Dispositif selon la revendication 1, **caractérisé en ce qu'**on utilise une photodiode PIN comme récepteur de référence.

3. Dispositif selon la revendication 1, **caractérisé en ce que** le récepteur de référence (3) est intégré dans l'émetteur (1).

4. Dispositif selon la revendication 1, **caractérisé en ce qu'**on utilise comme récepteur de référence (3) une photodiode à avalanche fonctionnant en mélangeur direct, remplaçant le mélangeur de fréquence (4).

5. Dispositif selon l'une des revendications 1 à 3, **caractérisé en ce que** le mélangeur de fréquence (4) est prévu en même temps également comme mélangeur, pour générer la fréquence de mélangeur et la fréquence de modulation de l'émetteur (1).

6. Dispositif selon l'une des revendications précédentes, **caractérisé en ce que** pour déterminer le point de travail du récepteur de mesure (2) est prévu une LED séparée, modulée à basse fréquence, qui, au début de chaque mesure de distance, illumine le récepteur de mesure (2) avec une intensité lumineuse connue, pendant une durée très courte.

7. Dispositif selon l'une des revendications précédentes, **caractérisé en ce qu'**est prévu un dispositif de commutation de rayonnement (20a, b), pouvant être réglé de manière que le rayonnement d'émetteur (1) arrive directement sur le récepteur de mesure (2) au lieu d'arriver sur l'objet de mesure.
